# EUROPEAN PATENT APPLICATION

(11) **EP 4 838 250 A1**
(43) Date of publication of application: **11.11.2026**
(21) Application number: 24919206.3
(22) Date of filing: 22.01.2024
(51) Int. Cl.: G01S 7/35, G01S 13/34

(54) **SIGNAL TRANSMISSION METHOD AND APPARATUS, SIGNAL PROCESSING METHOD AND APPARATUS, AND RADAR SYSTEM**

(71) Applicant: Yinwang Intelligent Technologies Co., Ltd., Shenzhen, Guangdong 518110 (CN)
(72) Inventor: CHANG, Guanghong, Shenzhen, Guangdong 518129 (CN)
(74) Representative: Maiwald GmbH
(86) International application number: PCT/CN2024/073478
(87) International publication number: WO 2025/156087

(57) **Abstract**

A signal transmission method and apparatus, a signal processing method and apparatus, and a radar system (1401) are provided, which are applied to the field of sensors. The signal transmission method includes: generating an FMCW signal (801), where the FMCW signal includes a plurality of chirp signals, and there are different time intervals between two adjacent chirp signals in the plurality of chirp signals; and transmitting the FMCW signal (802). After frequency mixing is performed on an echo signal formed by reflecting the FMCW signal via one or more targets, a phenomenon of spectral peak energy broadening does not exist when FFT processing is performed. This can improve a detection probability and a measurement accuracy in comparison with an existing solution.

## Description

### TECHNICAL FIELD

This application relates to the field of sensors, and in particular, to a signal transmission method and apparatus, a signal processing method and apparatus, and a radar system.

### BACKGROUND

With development of autonomous driving technologies, an increasing number of sensors, such as high-definition cameras, lidars, and millimeter-wave radars, are used in autonomous driving systems. The millimeter-wave radar is suitable for all-weather operation and can be used in short-range, medium-range, and long-range application scenarios. At present, a frequency modulated continuous wave (frequency modulated continuous wave, FMCW) radar is a commonly used millimeter-wave radar.

The FMCW radar transmits an FMCW signal whose frequency varies with time, and receives an echo signal corresponding to the transmitted FMCW signal. Target positioning and relative velocity measurement can be performed by using a difference between a frequency of the echo signal and a frequency of the transmitted signal. Due to its strong capability in measuring a range and a velocity of a target, the FMCW radar can usually perform unambiguous range measurement of the target, while performing ambiguous velocity measurement of the target. A time-frequency characteristic of the FMCW signal includes a linear variation of the frequency of the transmitted signal over time. Each linear variation segment is referred to as a chirp (Chirp), and a plurality of (for example, 256 or 512) chirps transmitted sequentially constitute a frame.

Start frequencies of chirps in a conventional FMCW signal are the same. In a typical frequency-stepped FMCW signal, each chirp is still an FMCW signal, and a difference from the conventional FMCW signal lies in that a start frequency of each chirp varies linearly. During actual application, the FMCW radar has a low accuracy when transmitting the typical frequency-stepped FMCW signal for target detection, range measurement, and velocity measurement.

### SUMMARY

This application provides a signal transmission method and apparatus, a signal processing method and apparatus, and a radar system, to improve an accuracy of target detection by an FMCW radar.

According to a first aspect, an embodiment of this application provides a signal transmission method. The method includes: generating a frequency modulated continuous wave (frequency modulated continuous wave, FMCW) signal, where the FMCW signal includes a plurality of chirp (chirp) signals; and transmitting the FMCW signal, where a time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} .$${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1.

In this embodiment of this application, the time interval between the j^{th} chirp signal and the (j-1)^{th} chirp signal of the transmitted FMCW signal in terms of time satisfies the foregoing formula, so that an echo signal that is formed by reflecting the FMCW signal via one or more targets and that undergoes frequency mixing satisfies the following formula (that is, an expression of the frequency-mixed echo signal satisfies the following formula): ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\}$ . i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f*_{*c*,*j*} is a start frequency of the j^{th} chirp signal, T is a sampling time interval, k is a sampling index in a single chirp signal, and v is a velocity of the one or more targets. In an existing solution in which detection is performed by transmitting a stepped FMCW signal, time intervals between all chirp signals that are adjacent in terms of time in a transmitted FMCW signal are equal. The expression of the echo signal that is formed after the FMCW signal is reflected by the one or more targets and that undergoes the frequency mixing includes a squared term (or referred to as a quadratic term) of j, and a phenomenon of spectral peak energy broadening exists when fast Fourier transform (FFT) processing is performed on the frequency-mixed echo signal, which affects a detection probability and a measurement accuracy. In this embodiment of this application, the foregoing formula met by the echo signal that is formed after the FMCW signal is reflected by the one or more targets and that undergoes frequency mixing includes a first-order term of j and does not include a squared term (or referred to as a quadratic term) of j, so that a phase characteristic of a high-speed moving target varies linearly in a second-dimensional signal, and a phenomenon of spectral peak energy broadening does not exist when FFT processing is performed on the frequency-mixed echo signal. This can improve a detection probability and a measurement accuracy in comparison with an existing solution.

In a possible implementation, ${T}_{c , j - 1}^{′} = {T}_{j} - {T}_{j - 1} = \frac{{f}_{c , 1} X}{\left[{f}_{c , 1}+\left(j-1\right){f}_{s}\right] \left[{f}_{c , 1}+\left(j-2\right){f}_{s}\right]}$*.*

In a possible implementation, ${T}_{c , j - 1}^{′} = {T}_{j} - {T}_{j - 1} = \frac{{f}_{c , 1} X}{{{f}_{c , 1}}^{2} + \left(2j-3\right) {f}_{c , 1} {f}_{s} + \left({j}^{2}-3j+2\right) {{f}_{s}}^{2}}$*.*

In a possible implementation, ${T}_{c , j - 1}^{′} = {T}_{j} - {T}_{j - 1} = \frac{{f}_{c , 1} X}{\left({{f}_{c , 1}}^{2}-3{f}_{c , 1}{f}_{s}+2{{f}_{s}}^{2}\right) + \left(2{f}_{c , 1}{f}_{s}-3{{f}_{s}}^{2}\right) j + {{f}_{s}}^{2} {j}^{2}}$ *.*

In a possible implementation, ${T}_{c , j - 1}^{′} = \frac{X}{{f}_{c , 1} - {f}_{s} + 2 {f}_{s} \left(j-1\right) + \frac{{f}_{s}^{2}}{{f}_{c , 1}} \left({j}^{2}-3j+2\right)}$*.*

In a possible implementation, $X = {T}_{c , 1}^{′} \left({f}_{c , 1}+{f}_{s}\right)$*,* and ${T}_{c , 1}^{′}$ is a time interval between the first chirp signal and a second chirp signal of the FMCW signal in terms of time. ${T}_{c , 1}^{′}$ may be a time interval between a start moment (or a transmission moment) of the first chirp signal of the FMCW signal in terms of time and a start moment of the second chirp signal of the FMCW signal in terms of time.

In this implementation, $X = {T}_{c , 1}^{′} \left({f}_{c , 1}+{f}_{s}\right)$*,* so that after the frequency mixing is performed on the echo signal formed after the FMCW signal is reflected by the one or more targets, a phenomenon of spectral peak energy broadening does not exist when FFT processing is performed, thereby improving a detection probability and a measurement accuracy.

In a possible implementation, a value of ${T}_{c , 1}^{′}$ ranges from 1 µs to 100 µs.

In this implementation, a value of ${T}_{c , 1}^{′}$ ranges from 1 µs to 100 µs, and performance of measuring a range and a velocity of the FMCW signal is good.

In a possible implementation, there are different time intervals between two adjacent chirp signals in the plurality of chirp signals. In this application, a time interval between two chirp signals may be a time interval between start moments of the two chirp signals. That there are different time intervals between two adjacent chirp signals in the plurality of chirp signals means that time intervals between two adjacent chirp signals in the plurality of chirp signals are not fixed values. For example, the time interval between the j^{th} chirp signal and the (j-1)^{th} chirp signal of the FMCW signal in terms of time is not equal to the time interval between the first chirp signal and the second chirp signal of the FMCW signal in terms of time.

In a possible implementation, start frequencies of the plurality of chirp signals vary linearly.

In a possible implementation, a waveform of the FMCW signal is a stepped FMCW waveform. In other words, the FMCW signal is a stepped FMCW signal.

In a possible implementation, the FMCW signal includes 256 chirp signals. A quantity of chirp signals included in the FMCW signal provided in this application is not limited.

In a possible implementation, the FMCW signal includes 512 chirp signals.

According to a second aspect, an embodiment of this application provides a signal receiving method. The method includes: receiving an echo signal, where the echo signal is formed by reflecting an FMCW signal via one or more targets, the FMCW signal includes a plurality of chirp (chirp) signals, and a time interval between the j^{th} chirp signal and the (j-1)^{th} chirp signal of the FMCW signal in terms of time satisfies the following formula: 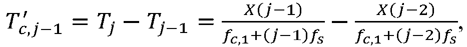 where
${T}_{c , j - 1}^{′}$ is the time interval between the j^{th} chirp signal and the (j-1)^{th} chirp signal, *Tⱼ* is a start moment (transmission moment) of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1; and determining at least one of a range and a velocity of the one or more targets based on the echo signal.

In this embodiment of this application, the time interval between the j^{th} chirp signal and the (j-1)^{th} chirp signal of the transmitted FMCW signal in terms of time satisfies the foregoing formula, so that an echo signal that is formed by reflecting the FMCW signal via one or more targets and that undergoes frequency mixing satisfies the following formula (that is, an expression of the frequency-mixed echo signal satisfies the following formula): ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\}$ . i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f*_{*c*,*j*} is a start frequency of the j^{th} chirp signal, T is a sampling time interval, k is a sampling index in a single chirp signal, and v is a velocity of the one or more targets. In an existing solution in which detection is performed by transmitting a stepped FMCW signal, time intervals between all chirp signals that are adjacent in terms of time in a transmitted FMCW signal are equal. The expression of the echo signal that is formed after the FMCW signal is reflected by the one or more targets and that undergoes the frequency mixing includes a squared term (or referred to as a quadratic term) of j, and a phenomenon of spectral peak energy broadening exists when fast Fourier transform (FFT) processing is performed on the frequency-mixed echo signal, which affects a detection probability and a measurement accuracy. In this embodiment of this application, the foregoing formula met by the received echo signal that undergoes frequency mixing includes a first-order term of j and does not include a squared term (or referred to as a quadratic term) of j, so that a phase characteristic of a high-speed moving target may vary linearly in a second-dimensional signal, and a phenomenon of spectral peak energy broadening does not exist when FFT processing is performed on the frequency-mixed echo signal. This can improve a detection probability and a measurement accuracy in comparison with an existing solution.

In a possible implementation, ${T}_{c , j - 1}^{′} = {T}_{j} - {T}_{j - 1} = \frac{{f}_{c , 1} X}{\left[{f}_{c , 1}+\left(j-1\right){f}_{s}\right] \left[{f}_{c , 1}+\left(j-2\right){f}_{s}\right]}$*.*

In a possible implementation, ${T}_{c , j - 1}^{′} = {T}_{j} - {T}_{j - 1} = \frac{{f}_{c , 1} X}{{{f}_{c , 1}}^{2} + \left(2j-3\right) {f}_{c , 1} {f}_{s} + \left({j}^{2}-3j+2\right) {{f}_{s}}^{2}}$*.*

In a possible implementation, ${T}_{c , j - 1}^{′} = {T}_{j} - {T}_{j - 1} =$*.* $\frac{{f}_{c , 1} X}{\left({{f}_{c , 1}}^{2}-3{f}_{c , 1}{f}_{s}+2{{f}_{s}}^{2}\right) + \left(2{f}_{c , 1}{f}_{s}-3{{f}_{s}}^{2}\right) j + {{f}_{s}}^{2} {j}^{2}}$*.*

In a possible implementation, ${T}_{c , j - 1}^{′} = \frac{X}{{f}_{c , 1} - {f}_{s} + 2 {f}_{s} \left(j-1\right) + \frac{{f}_{s}^{2}}{{f}_{c , 1}} \left({j}^{2}-3j+2\right)}$*.*

In a possible implementation, $X = {T}_{c , 1}^{′} \left({f}_{c , 1}+{f}_{s}\right)$*,* and ${T}_{c , 1}^{′}$ is a time interval between the first chirp signal and a second chirp signal of the FMCW signal in terms of time.

In a possible implementation, a value of ${T}_{c , 1}^{′}$ ranges from 1 µs to 100 µs.

In this implementation, a value of ${T}_{c , 1}^{′}$ ranges from 1 µs to 100 µs, and performance of measuring a range and a velocity of the FMCW signal is good.

In a possible implementation, determining the at least one of the range and the velocity of the one or more targets based on the echo signal includes: performing frequency mixing based on the FMCW signal and the echo signal, to obtain a frequency-mixed echo signal; and determining, based on the frequency-mixed echo signal, the at least one of the range and the velocity of the one or more targets. An expression of the frequency-mixed echo signal satisfies the following formula:

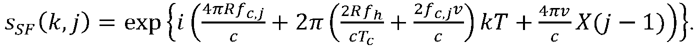

i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f_{c,j}* is a start frequency of the j^{th} chirp signal, T is a sampling time interval, k is a sampling index in a single chirp signal, and v is a velocity of the one or more targets.

In this implementation, the expression of the frequency-mixed echo signal includes a first-order term of j and does not include a squared term (or referred to as a quadratic term) of j, and a phenomenon of spectral peak energy broadening does not exist when FFT processing is performed on the frequency-mixed echo signal. This can improve a detection probability and a measurement accuracy in comparison with an existing solution.

In a possible implementation, start frequencies of the plurality of chirp signals vary linearly.

In a possible implementation, a waveform of the FMCW signal is a stepped FMCW waveform. In other words, the FMCW signal is a stepped FMCW signal.

In a possible implementation, the FMCW signal includes 256 chirp signals. A quantity of chirp signals included in the FMCW signal provided in this application is not limited.

In a possible implementation, the FMCW signal includes 512 chirp signals.

According to a third aspect, an embodiment of this application provides a signal transmission apparatus. The signal transmission apparatus includes: a transmitting module, configured to transmit an FMCW signal, where the FMCW signal includes a plurality of chirp (chirp) signals. A time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} .$${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1.

In a possible implementation, $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time.

For possible implementations of the signal transmission apparatus in the third aspect, refer to the possible implementations of the first aspect.

For technical effects brought by the possible implementations of the third aspect, refer to descriptions of technical effects of the possible implementations of the first aspect.

According to a fourth aspect, an embodiment of this application provides a signal processing apparatus. The signal processing apparatus includes: a receiving module, configured to receive an echo signal, where the echo signal is formed by reflecting an FMCW signal via one or more targets, the FMCW signal includes a plurality of chirp (chirp) signals, and a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ where
${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1; and perform at least frequency mixing, filtering, and analog-to-digital conversion based on the echo signal, to obtain a digital signal; and a processing module, configured to determine at least one of a range and a velocity of the one or more targets based on the digital signal.

In a possible implementation, $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time.

In a possible implementation, a value of ${T}_{c , 1}^{′}$ ranges from 1 µs to 100 µs.

In a possible implementation, the receiving module is further configured to perform frequency mixing based on the FMCW signal and the echo signal, to obtain a frequency-mixed echo signal. The processing module is specifically configured to determine, based on the frequency-mixed echo signal, the at least one of the range and the velocity of the one or more targets. An expression of the frequency-mixed echo signal satisfies the following formula: ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\} .$

i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f*_{*c*,*j*} is a start frequency of the j^{th} chirp signal, T is a sampling time interval, k is a sampling index in a single chirp signal, and v is a velocity of the one or more targets.

For possible implementations of the signal processing apparatus in the fourth aspect, refer to the possible implementations of the second aspect.

For technical effects brought by the possible implementations of the fourth aspect, refer to descriptions of technical effects of the possible implementations of the second aspect.

According to a fifth aspect, an embodiment of this application provides a radar system, including: a transmitting module, configured to transmit an FMCW signal, where the FMCW signal includes a plurality of chirp (chirp) signals, where a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ where
${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1; a receiving module, configured to: receive an echo signal, where the echo signal is formed by reflecting the FMCW signal via one or more targets; and perform at least frequency mixing, filtering, and analog-to-digital conversion based on the echo signal, to obtain a digital signal; and a processing module, configured to determine at least one of a range and a velocity of the one or more targets based on the digital signal.

In this embodiment of this application, the foregoing formula met by the echo signal that is formed after the FMCW signal is reflected by the one or more targets and that undergoes frequency mixing includes a first-order term of j and does not include a squared term (or referred to as a quadratic term) of j, and a phenomenon of spectral peak energy broadening does not exist when FFT processing is performed on the frequency-mixed echo signal. This can improve a detection probability and a measurement accuracy in comparison with an existing solution.

In a possible implementation, the receiving module is configured to perform frequency mixing based on the FMCW signal and the echo signal, to obtain a frequency-mixed echo signal. The processing module is specifically configured to determine, based on the frequency-mixed echo signal, the at least one of the range and the velocity of the one or more targets. An expression of the frequency-mixed echo signal satisfies the following formula: ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\} .$

i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f*_{*c*,*j*} is a start frequency of the j^{th} chirp signal, T is a sampling time interval, k is a sampling index in a single chirp signal, and v is a velocity of the one or more targets.

In this implementation, the expression of the frequency-mixed echo signal includes a first-order term of j and does not include a squared term (or referred to as a quadratic term) of j, and a phenomenon of spectral peak energy broadening does not exist when FFT processing is performed on the frequency-mixed echo signal. This can improve a detection probability and a measurement accuracy in comparison with an existing solution.

For possible implementations of the radar system in the fifth aspect, refer to the possible implementations of the first aspect and the possible implementations of the second aspect.

For technical effects brought by the possible implementations of the fifth aspect, refer to descriptions of technical effects of the possible implementations of the first aspect and descriptions of technical effects of the possible implementations of the second aspect.

According to a sixth aspect, an embodiment of this application provides a terminal device. The terminal device includes the radar system according to the fifth aspect or any possible implementation of the fifth aspect.

According to a seventh aspect, an embodiment of this application provides a signal generator, configured to generate an FMCW signal. The FMCW signal includes a plurality of chirp (chirp) signals, and a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} .$${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1. For example, the signal generator is a voltage-controlled oscillator or another oscillator.

For possible implementations of the signal transmission apparatus in the seventh aspect, refer to the possible implementations of the first aspect.

For technical effects brought by the possible implementations of the seventh aspect, refer to descriptions of technical effects of the possible implementations of the first aspect.

According to an eighth aspect, this application provides another signal transmission apparatus. The signal transmission apparatus includes a processing circuit and an interface circuit. The interface circuit is configured to obtain a signal or output a signal. The processing circuit is configured to perform the method according to the first aspect or any possible implementation of the first aspect.

According to a ninth aspect, this application provides another signal processing apparatus. The signal transmission apparatus includes a processing circuit and an interface circuit. The interface circuit is configured to obtain a signal or output a signal. The processing circuit is configured to perform the method according to the second aspect or any possible implementation of the second aspect.

According to a tenth aspect, this application provides a computer-readable storage medium. The computer-readable storage medium stores a computer program, the computer program includes program instructions, and when the program instructions are executed, a computer is enabled to perform the method according to the first aspect or the second aspect.

According to an eleventh aspect, this application provides a computer program product. The computer program product includes a computer program, the computer program includes program instructions, and when the program instructions are executed, a computer is enabled to perform the method according to the first aspect or the second aspect.

According to a twelfth aspect, this application provides a chip, including a communication interface and a processor. The communication interface is configured to receive and send a signal of the chip. The processor is configured to execute computer program instructions, so that a communication apparatus including the chip performs the method according to the first aspect or the second aspect.

### BRIEF DESCRIPTION OF DRAWINGS

FIG. 1 is an example diagram of a waveform of a linear frequency modulated continuous wave;
FIG. 2 is a diagram of a time-frequency characteristic of a conventional FMCW signal;
FIG. 3 is a diagram of time-frequency characteristics of two stepped FMCW signals;
FIG. 4 is a diagram in which radar systems are mounted on a vehicle according to an embodiment of this application;
FIG. 5 is a diagram of a possible application scenario according to this application;
FIG. 6 shows main lobe broadening at different speeds obtained by performing FFT processing on a signal that is obtained by performing frequency mixing on an echo signal of a typical stepped FMCW signal;
FIG. 7 shows main lobe broadening at different speeds obtained by performing FFT processing on a signal that is obtained by performing frequency mixing on an echo signal of an unequal-interval frequency-stepped FMCW signal;
FIG. 8 is a flowchart of a signal transmission method according to an embodiment of this application;
FIG. 9 is a diagram of a possible structure of a transmitting module according to this application;
FIG. 10 is a flowchart of a signal processing method according to an embodiment of this application;
FIG. 11 is a diagram of a possible structure of a receiving module according to this application;
FIG. 12 is a flowchart of a detection method according to an embodiment of this application;
FIG. 13 is a diagram of a structure of a radar system according to this application; and
FIG. 14 is a diagram of a structure of a terminal device according to this application.

### DESCRIPTION OF EMBODIMENTS

In the specification, claims, and the accompanying drawings of this application, terms such as "first" and "second" are only intended to distinguish between different objects but do not describe a particular order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any variants thereof are intended to cover a non-exclusive inclusion. For example, processes, methods, systems, products, or devices that include a series of steps or units are not limited to the listed steps or units, but optionally further include steps or units that are not listed, or optionally further include other steps or units inherent to these processes, methods, products, or devices.

An "embodiment" mentioned in this specification means that a particular feature, structure, or characteristic described with reference to this embodiment may be included in at least one embodiment of this application. The phrase shown in various positions in the specification may not necessarily refer to a same embodiment, and is not an independent or optional embodiment exclusive from another embodiment. It may be explicitly and implicitly understood by a person skilled in the art that embodiments described in the specification may be combined with another embodiment. In this application, names of messages are merely used to distinguish between different messages, and should not be construed as a limitation. In other words, a name of any message in this application may be replaced with another name. This is not limited in this application.

Terms used in the following embodiments of this application are merely intended to describe specific embodiments, but are not intended to limit this application. The terms "a", "one", "the foregoing", "this", "such a", and "the one" of singular forms used in this specification and the appended claims of this application are also intended to include plural expressions, unless otherwise specified in the context clearly. It should be further understood that the term "and/or" used in this application indicates and includes any or all possible combinations of one or more of the listed items. For example, "A and/or B" may represent three cases: Only A exists, only B exists, and both A and B exist, where A and B may be singular or plural. The term "a plurality of" used in this application means two or more. In text descriptions of this application, the character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

It should be understood that in this application, the indication includes a direct indication (which is also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

In embodiments of this application, terms such as "example" or "for example" are used to represent giving an example, an illustration, or a description. Any embodiment or design scheme described as an "example" or "for example" in this application should not be construed as being more preferred or having more advantages than another embodiment or design scheme. To be precise, use of the terms such as "example" or "for example" is intended to present a related concept in a specific manner.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

For ease of understanding, the following first explains some terms in embodiments of this application.

A millimeter wave is an electromagnetic wave whose wavelength ranges from 1 mm to 10 mm, and corresponds to a frequency range of 30 GHz to 300 GHz. In this frequency band, millimeter wave-related features are very suitable for use in the vehicle-mounted field. For example, a high bandwidth means abundant frequency domain resources and a low antenna side lobe, thereby facilitating imaging or quasi-imaging. A short wavelength means a reduced size of a radar device and a reduced antenna diameter, and therefore a weight is reduced. A narrow beam means that in a case of a same antenna size, a millimeter-wave beam is much narrower than a micrometer-wave beam, and therefore radar resolution is high. Strong penetration means that compared with a lidar and an optical system, a millimeter-wave radar has a better capability of penetrating smoke, dust, and fog, and can work around the clock.

A frequency modulated continuous wave is an electromagnetic wave whose frequency varies with time.

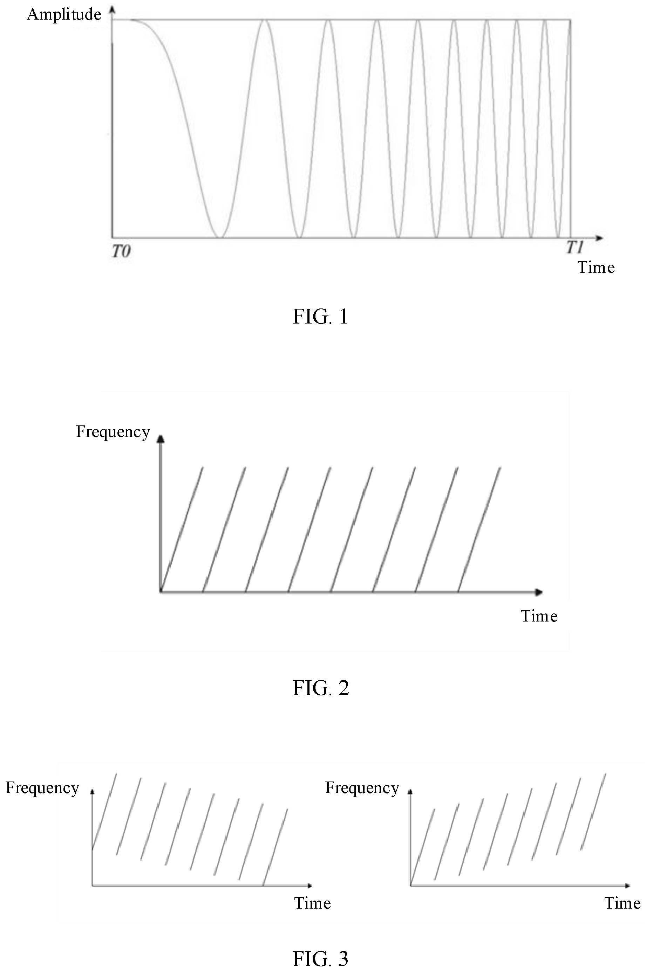

A linear frequency-swept frequency modulated continuous wave (linear frequency modulated continuous wave) is a frequency modulated continuous wave whose frequency varies linearly with time. The linear variation usually indicates a linear variation within one period. A waveform with a frequency variation is usually a sawtooth wave or a triangular wave. Alternatively, there may be another possible waveform, for example, a pulse. FIG. 1 is an example diagram of a waveform of a linear frequency modulated continuous wave.

A linear frequency modulated signal is a type of pulse signal. The linear frequency modulated signal, also referred to as a chirp (chirp) signal, is an electromagnetic wave signal whose frequency varies linearly with time. The linear variation herein is usually a linear variation within one transmission period. For example, a waveform of the linear frequency modulated signal may be usually a sawtooth wave, a triangular wave, or the like, or may be another possible waveform. This application includes but is not limited thereto.

An FMCW signal is a linear frequency modulated continuous wave. A frequency of the FMCW signal varies linearly with time. Each linear variation segment is a chirp (chirp) signal (namely, a pulse), and a plurality of (for example, 256 or 512) chirps transmitted sequentially constitute a frame. One frame corresponds to one frame period. In other words, the FMCW signal includes a plurality of chirp signals, and each chirp signal corresponds to a time period in which a frequency varies linearly with time. Start frequencies of chirp signals in a conventional FMCW signal are the same. FIG. 2 is a diagram of a time-frequency characteristic of a conventional FMCW signal. As shown in FIG. 2, start frequencies of chirp signals in a conventional FMCW signal are the same, and time intervals between all chirp signals that are adjacent in terms of time are equal. That is, a time interval between two chirp signals that are adjacent in terms of time is a fixed value. A difference between a stepped FMCW signal and the conventional FMCW signal lies in that a start frequency of a chirp signal in the stepped FMCW signal varies linearly. FIG. 3 is a diagram of time-frequency characteristics of two stepped FMCW signals. As shown in FIG. 3, a start frequency of a chirp signal in the stepped FMCW signal may increase linearly or decrease linearly. Compared with the conventional FMCW signal, the stepped FMCW signal can increase a total bandwidth of a frame of signal because a bandwidth of a frame is a sum of a bandwidth of a single chirp signal and a step bandwidth. In theory, increasing the bandwidth can improve a range resolution of a radar.

A millimeter-wave radar is a radar that operates in a millimeter-wave band, and usually includes a transmitting module, a receiving module, a processing module, and the like. The transmitting module generates a radar signal whose frequency increases linearly with time. The radar signal is usually an FMCW signal (signal). A part of the radar signal is output to a frequency mixer in the receiving module as a local oscillator signal (for example, output to the frequency mixer in the receiving module through a directional coupler), and a part of the radar signal is transmitted by using the transmitting module (for example, output to the transmitting module by using the directional coupler). The receiving module receives a radar signal (or referred to as a reflected signal or an echo signal) that is reflected from the transmitted radar signal that strikes on a target. The frequency mixer in the receiving module mixes the received echo signal and the local oscillator signal, to obtain an intermediate frequency signal (or referred to as an intermediate frequency echo signal). The intermediate frequency signal includes information such as a range, a velocity, and an angle of a target relative to the radar system. The intermediate frequency signal passes through a low-pass filter and undergoes amplification processing, and then is transmitted to the processing module. The processing module performs processing such as a fast Fourier transform and spectrum analysis on the received signal, to obtain information such as the range, the velocity, and the angle of the target relative to the radar system. Finally, the processing module may output the obtained information to a controller, to control behaviors of a vehicle.

The radar mentioned in embodiments of this application may be a frequency modulated continuous wave (frequency modulated continuous wave, FMCW) radar, a frequency modulated continuous wave lidar (FMCW lidar), or another radar or detection apparatus that performs detection by transmitting an FMCW signal. The radar in embodiments of this application can be applied to various fields such as intelligent transportation, autonomous driving, atmospheric environment monitoring, geographic mapping, and uncrewed aerial vehicles, and can complete one or more functions of target detection, range measurement, velocity measurement, target tracking, imaging recognition, and the like.

Doppler bin (Doppler bin): In a spectrum graph obtained by performing a fast Fourier transform (fast Fourier transform, FFT) on data, a frequency interval or resolution in Doppler domain usually depends on a sampling rate and a quantity of sampling points. For example, Doppler bin=Sampling rate/Quantity of sampling points.

A frequency step size fs, which may also be referred to as a step bandwidth, may measure a frequency offset between two adjacent chirp signals. Specifically, a frequency offset between two adjacent chirp signals may be determined by using start frequencies of the two adjacent chirp signals. Refer to FIG. 3. An example is used in which a frequency offset of two adjacent chirp signals is determined by using start frequencies of the two adjacent chirp signals. An offset between a start frequency of the first chirp (chirp) signal and a start frequency of a second chirp (chirp) signal is fs.

A range resolution means a resolution in a range dimension, and specifically indicates a minimum range at which the radar can distinguish between two targets. A pulse is used as an example. When a trailing edge (falling edge) of a pulse from a nearer target coincides with a leading edge (rising edge) of a pulse from a farther target, this represents a limit of resolution. At this point, a distance between the two targets is the range resolution.

Detection apparatus: The detection apparatus mentioned in this application may be a radar (or referred to as a radar apparatus), or may be another detection apparatus (for example, a ranging apparatus). A working principle of the detection apparatus is to detect a corresponding target object by transmitting a signal (or referred to as a detection signal) and receiving a reflected signal (or referred to as an echo signal) reflected by the target object. Optionally, a signal transmitted by the radar may be referred to as a radar signal, and a reflected signal that is received by the radar and that is reflected by the target object may also be referred to as a radar signal.

The foregoing describes some terms used in this application. The following describes possible application scenarios of this application.

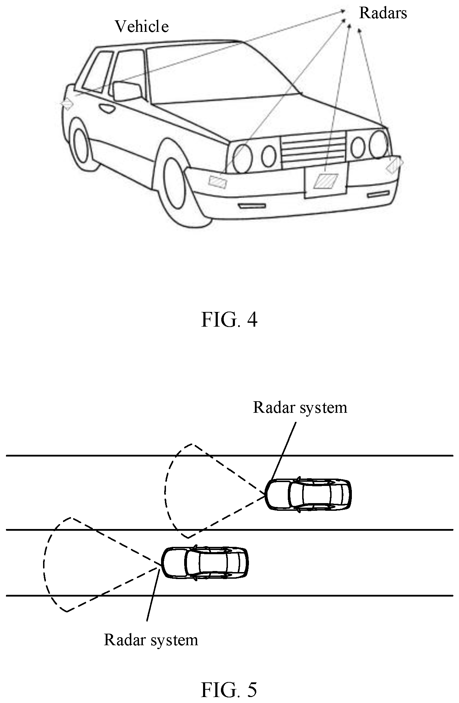

In a possible application scenario, the signal transmission apparatus, the signal processing apparatus, or the radar system (or named as a detection apparatus) in this application may be mounted on a vehicle, and may be specifically mounted at various positions of the vehicle. For example, radar systems may be mounted on any one or more of four directions, namely, front, rear, left, and right directions of the transportation means, to capture information about an environment around the transportation means. Refer to FIG. 4. For example, the transportation means is a vehicle. An example is used in which radar systems (radars shown in FIG. 4) are mounted at six directions of the vehicle, namely, front, front left, front right, rear left, rear (not shown in FIG. 4) and rear right (not shown in FIG. 4). FIG. 4 is a diagram in which radar systems are mounted on a vehicle according to an embodiment of this application.

FIG. 5 is a diagram of a possible application scenario according to this application. The radar system on the vehicle can sense a sector area indicated by a dashed box, and the sector area may be referred to as a detection area of the radar system. The radar system can obtain information (such as a range, moving speed, and posture of a target) about a target (such as a surrounding vehicle or an obstacle) within a specified range in real time or periodically. The radar system or the vehicle may determine a location of the vehicle based on the obtained information, and may perform trajectory planning, and the like. For example, a quantity and density of obstacles around the vehicle are determined by using a distance between surrounding objects. Further, optionally, assisted driving, autonomous driving, or the like of the vehicle may be implemented in combination with a function of an advanced driver assistance system (advanced driver assistance system, ADAS). It should be understood that a principle of detecting a target by the radar system is as follows: The radar system transmits a signal in a specific direction. If a target is present within a detection area of the radar system, the target reflects the transmitted signal back to the radar system (the reflected signal may be referred to as an echo signal), and the radar system determines information about the target based on the echo signal.

It should be noted that the foregoing application scenario is merely an example. The signal transmission apparatus, the signal processing apparatus, or the radar system provided in this application may be further applied to a plurality of other possible scenarios, and is not limited to the scenario described in the foregoing example. For example, the radar system may alternatively be mounted on an uncrewed aerial vehicle as an airborne radar system. For another example, the radar system may alternatively be mounted on a roadside unit (roadside unit, RSU) as a roadside traffic radar system, and may implement intelligent vehicle-road cooperative communication and the like. For another example, the radar system may be mounted on an automated guided vehicle (automated guided vehicle, AGV). The AGV is a transport vehicle that is equipped with an automatic navigation apparatus such as an electromagnetic or optical navigation apparatus, that can travel along a specified navigation route, and that has safety protection and various load transfer functions. The signal transmission apparatus, the signal processing apparatus, or the radar system provided in this application may be sold separately in a form of hardware. That is, the signal transmission apparatus, the signal processing apparatus, or the radar system is sold separately. Alternatively, the signal transmission apparatus, the signal processing apparatus, or the radar system may be integrated into another product, for example, a vehicle-mounted millimeter-wave radar.

The foregoing application scenario may be applied to fields such as self driving, autonomous driving, assisted driving, intelligent driving, networked vehicles, security protection, remote interaction, artificial intelligence, or surveying and mapping. A mounting position and a function of the radar system are not limited in this application.

With development of intelligent driving technologies, the vehicle-mounted millimeter-wave radar plays an increasingly important role in vehicle-mounted sensors. The vehicle requires that the radar can detect a target at a longer range and also expects the radar to have a better range resolution to distinguish between two adjacent targets or report more monitoring points on a single extended target for estimating a contour of the target. Due to its strong capability in measuring a range and a velocity of a target, the FMCW signal can usually perform unambiguous range measurement of the target, while velocity measurement of the target may suffer from ambiguity. Currently, a millimeter-wave radar usually uses an FMCW signal as a detection signal (or uses an FMCW waveform as a detection waveform). Under typical parameters, each chirp signal in an FMCW signal has 1024 sampling points, and a millimeter-wave radar usually sends 256 chirp signals, namely, an FMCW signal, within one period. The FMCW signal is radiated to the space through a transmit antenna. An echo signal reflected from a target is received by a receive antenna. After undergoing frequency mixing, filtering, and sampling, the echo signal is processed with an FFT twice to obtain a range-Doppler spectrum, and then range and velocity information of the target is obtained. For example, after the millimeter-wave radar performs a first-dimensional FFT transform on a frequency-mixed echo signal of each chirp signal, 1024 range bins may be obtained. Because mirror effect exists in FFT processing of a real number, a quantity of valid range bins is 512. After a second-dimensional FFT transform is performed on the data, a Doppler spectrum or velocity spectrum of the target, namely, 256 Doppler bins, may be obtained.

Because a quantity of range bins used by the FMCW signal for target measurement is fixed, a maximum measurable range of the target is also determined under a given range resolution. For example, if the range resolution is 0.5 m, the maximum measurable range is about 256 m. If the range resolution is further reduced to 0.2 m, the maximum measurable range is reduced to 102.4 m. To resolve a conflict between the range resolution and a detection range, in this application, a stepped FMCW signal is used to shift a dimension for range resolution from the first-dimensional FFT to the second-dimensional FFT, so that the range resolution is improved while a range detection range is ensured. For example, by introducing a linear frequency step between chirp signals, a range resolution of 0.2 m can be achieved in a second dimension while maintaining a maximum detection range of 256 m in a first dimension.

At present, many millimeter-wave radars perform detection by transmitting typical stepped FMCW signals, for example, to measure a velocity and range of a target. In a typical stepped FMCW signal, time intervals between all chirp signals that are adjacent in terms of time are equal. That is, a time interval between two chirp signals that are adjacent in terms of time is a fixed value. When the millimeter-wave radar performs detection by transmitting a typical stepped FMCW signal, an echo signal that is received by a receive antenna of the millimeter-wave radar and that undergoes frequency mixing satisfies the following formula (that is, an expression of the frequency-mixed echo signal satisfies the following formula): ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 {πf}_{c , j} v}{c}\left(j-1\right){T}_{c}^{′}\right)\right\}$ (1).

i is an imaginary unit, R is a range of one or more targets, j is an index of the j^{th} chirp signal of the typical stepped FMCW signal in terms of time, c is a speed of light, *fₕ* is a bandwidth of a single chirp signal, Tc is an effective transmission duration of a chirp signal (or a pulse repetition interval of the chirp signal), *f*_{*c*,*j*} is a start frequency of the j^{th} chirp signal, T is a sampling time interval, k is a sampling index (or a fast-time sampling index) in a single chirp signal, v is a velocity of the one or more targets, and ${T}_{c}^{′}$ is a time interval between two chirp signals that are adjacent in terms of time in the typical stepped FMCW signal. ${T}_{c}^{′}$ is a fixed value, and j is a slow-time index, that is, an index of a chirp signal. Optionally, the frequency-mixed echo signal is an intermediate frequency signal (or referred to as an intermediate frequency echo signal) obtained by performing frequency mixing on a local oscillator signal and the echo signal.

It is assumed that a carrier frequency of a chirp signal in the typical stepped FMCW signal varies linearly with an index of the chirp signal. That is, *f*_{*c*,*j*} = *f*_{*c,*1} + (*j* - 1)*fₛ*, where fs is a frequency step size, and a last item in the foregoing formula (1) satisfies the following formula: $\frac{4 {πf}_{c , j} v}{c} \left(j-1\right) {T}_{c}^{′} = \frac{4 πv}{c} {T}_{c}^{′} \left(-{f}_{c , 1}+{f}_{s}+\left({f}_{c , 1}-2{f}_{s}\right)j+{f}_{s}{j}^{2}\right)$ (2).

fs is a frequency step size, *f*_{*c,*1} is an index of the j^{th} chirp signal of the typical stepped FMCW signal in terms of time, and meanings of parameters in formula (2) are the same as meanings of parameters in formula (1).

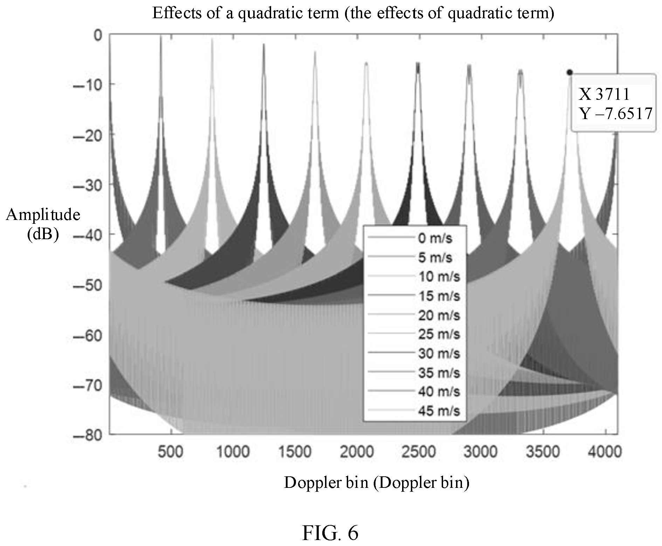

In formula (2), a squared term appears on the index j in a second dimension, and a phenomenon of spectral peak energy broadening exists when FFT processing is performed on the frequency-mixed echo signal, which affects a detection probability and a measurement accuracy. FIG. 6 shows main lobe broadening at different speeds obtained by performing FFT processing on a signal that is obtained by performing frequency mixing on an echo signal of a typical stepped FMCW signal. As shown in FIG. 6, a phenomenon of spectral peak energy broadening exists when FFT processing is performed on the frequency-mixed echo signal. It can be learned that using the typical stepped FMCW signal for detection leads to a decrease in the detection probability and the measurement accuracy.

To resolve a problem of a decrease in the detection probability and the measurement accuracy caused by using the typical stepped FMCW signal for detection, this application proposes that detection is performed by transmitting an unequal-interval frequency-stepped FMCW signal. Compared with the typical stepped FMCW signal, the unequal-interval frequency-stepped FMCW signal provided in this application has at least the following difference: A time interval between two chirp signals that are adjacent in terms of time is not a fixed value, or a transmission moment of each chirp signal does not vary linearly.

The following describes how an unequal-interval frequency-stepped FMCW signal proposed in this application is derived, and a reason why a detection probability and a measurement accuracy can be improved by transmitting the unequal-interval frequency-stepped FMCW signal proposed in this application for detection. When the millimeter-wave radar (or another type of radar) transmits the unequal-interval frequency-stepped FMCW signal, an echo signal that is received by a receive antenna of the millimeter-wave radar and that undergoes frequency mixing satisfies the following formula (that is, an expression of the frequency-mixed echo signal satisfies the following formula): ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 {πf}_{c , j} v}{c}{T}_{j}\right)\right\}$ (3).

*Tⱼ* is a transmission moment (namely, a start moment) of the j^{th} chirp signal that is arranged in a time sequence in the unequal-interval frequency-stepped FMCW signal, ${T}_{j} = {T}_{j - 1} + {T}_{c , j - 1}^{′}$ , *T*_{*j-*1} is a transmission moment of the (j-1)^{th} chirp signal that is arranged in a time sequence in the unequal-interval frequency-stepped FMCW signal, ${T}_{c , j - 1}^{′}$ is a time interval between the j^{th} chirp signal and the (j-1)^{th} chirp signal, *j =* 1,2, *..., N_{c},* and Nc is a quantity of chirp signals within a frame of signal, namely, a quantity of chirp signals included in the unequal-interval frequency-stepped FMCW signal. For meanings of parameters in formula (3), refer to meanings of parameters in formula (1). Details are not described herein again.

It can be learned from formula (3) that, when $\frac{4 {πf}_{c , j} v}{c} {T}_{j}$ includes a first-order term of j and does not include a squared term (or referred to as a quadratic term) of j, a phenomenon of spectral peak energy broadening does not exist when FFT processing is performed on the frequency-mixed echo signal. This can improve a detection probability and a measurement accuracy in comparison with an existing solution. In a possible implementation, $\frac{4 {πf}_{c , j} v}{c} {T}_{j}$ satisfies the following formula: $\frac{4 {πf}_{c , j} v}{c} {T}_{j} = \frac{4 πv}{c} \left({f}_{c , 1}+\left(j-1\right){f}_{s}\right) {T}_{j} = \frac{4 πv}{c} X \left(j-1\right)$ (4).

*f*_{*c,*1} represents a start frequency of the first chirp signal in the unequal-interval frequency-stepped FMCW signal in terms of time, *fₛ* is a frequency step size, and X is a fixed constant.

Let j=1 in the foregoing formula (4), and it may be obtained that *T*₁ = 0. j=2 is substituted into ${T}_{j} = {T}_{j - 1} + {T}_{c , j - 1}^{′}$ to obtain ${T}_{2} = {T}_{1} + {T}_{c , 1}^{′} = {T}_{c , 1}^{′}$. ${T}_{c , 1}^{′}$ is a time interval between the first chirp signal and a second chirp signal of the unequal-interval frequency-stepped FMCW signal in terms of time. Let j=2 in the foregoing formula (4), and it may be obtained that *X* = $\left({f}_{c , 1}+{f}_{s}\right) ∗ {T}_{2} = \left({f}_{c , 1}+{f}_{s}\right) ∗ {T}_{c , 1}^{′}$.

When $\frac{4 {πf}_{c , j} v}{c} {T}_{j}$ satisfies the foregoing formula (4), ${T}_{c , j - 1}^{′}$ satisfies the following formula (5): $\begin{matrix}{T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} \\ = \frac{{f}_{c , 1} X}{\left[{f}_{c , 1}+\left(j-1\right){f}_{s}\right] \left[{f}_{c , 1}+\left(j-2\right){f}_{s}\right]} \\ = \frac{{f}_{c , 1} X}{{{f}_{c , 1}}^{2} + \left(2j-3\right) {f}_{c , 1} {f}_{s} + \left({j}^{2}-3j+2\right) {{f}_{s}}^{2}} \\ = \frac{{f}_{c , 1} X}{\left({{f}_{c , 1}}^{2}-3{f}_{c , 1}{f}_{s}+2{f}_{s}^{2}\right) + \left(2{f}_{c , 1}{f}_{s}-3{f}_{s}^{2}\right) j + {f}_{s}^{2} {j}^{2}} \\ = \frac{X}{{f}_{c , 1} - {f}_{s} + 2 {f}_{s} \left(j-1\right) + \frac{{f}_{s}^{2}}{{f}_{c , 1}} \left({j}^{2}-3j+2\right)}\end{matrix}$$X = \left({f}_{c , 1}+{f}_{s}\right) ∗ {T}_{c , 1}^{′}$, *fₛ* is a frequency step size, and *f*_{*c,*1} is the start frequency of the first chirp signal in the unequal-interval frequency-stepped FMCW signal in terms of time.

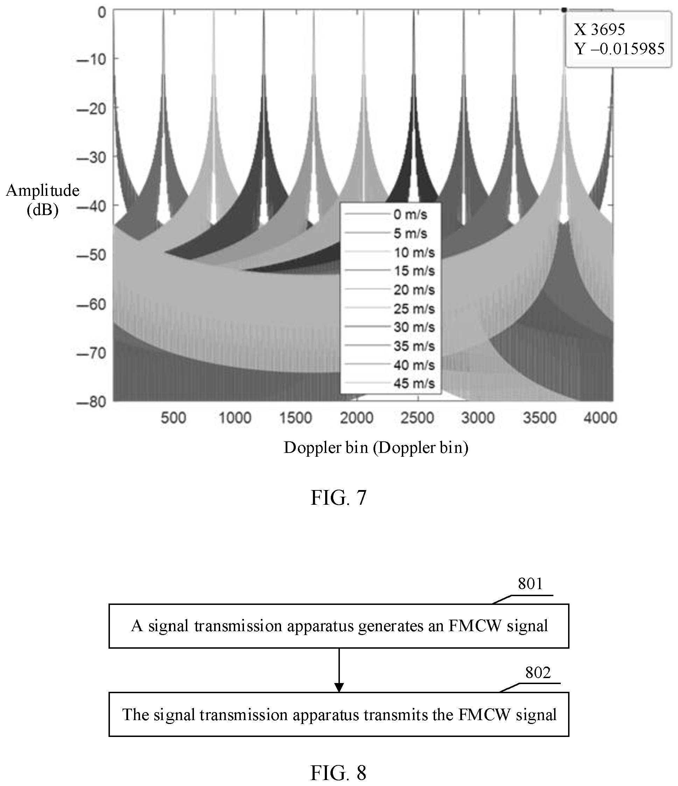

It should be understood that, when a time interval between chirp signals that are adjacent in terms of time in the unequal-interval frequency-stepped FMCW signal satisfies formula (5), $\frac{4 {πf}_{c , j} v}{c} {T}_{j}$ in the foregoing formula (3) satisfies the foregoing formula (4). Therefore, a phenomenon of spectral peak energy broadening does not exist when FFT processing is performed on a frequency-mixed echo signal is performed on an echo signal of the unequal-interval frequency-stepped FMCW signal. This can improve a detection probability and a measurement accuracy in comparison with an existing solution. FIG. 7 shows main lobe broadening at different speeds obtained by performing FFT processing on a signal that is obtained by performing frequency mixing on an echo signal of an unequal-interval frequency-stepped FMCW signal. As shown in FIG. 7, a phenomenon of spectral peak energy broadening does not exist when FFT processing is performed on the frequency-mixed echo signal.

It should be noted that the foregoing formula (4) is merely an example, and $\frac{4 {πf}_{c , j} v}{c} {T}_{j}$ may be another linear expression in one variable with respect to j. For example, $\frac{4 {πf}_{c , j} v}{c} {T}_{j} = \frac{4 πv}{c} Xj + Y$ *,* the foregoing formula (4) is an example of $\frac{4 {πf}_{c , j} v}{c} {T}_{j} = \frac{4 πv}{c} Xj + Y$*,* and values of X and Y may be calculated in a similar manner. Details are not described herein again.

With reference to the accompanying drawings, the following separately describes the signal transmission method, the signal processing method, the signal transmission apparatus, the signal processing apparatus, and the radar system that are provided in this application.

FIG. 8 is a flowchart of the signal transmission method according to an embodiment of this application. As shown in FIG. 8, the method includes the following steps.

801: A signal transmission apparatus generates an FMCW signal.

In a possible implementation, the signal transmission apparatus may include a transmitting module, and the transmitting module generates the FMCW signal. The signal transmission apparatus may alternatively generate the FMCW signal in another manner. This is not limited in this application. For example, the signal transmission apparatus further includes a processing module, and the processing module is configured to control a voltage-controlled oscillator to generate an FMCW signal.

In a possible implementation, the transmitting module includes a voltage-controlled oscillator (voltage-controlled oscillator, VCO), a power amplifier (power amplifier, PA), and a transmit antenna (transmit antenna, TX). The FMCW signal generated by the transmitting module may be the FMCW signal generated by the voltage-controlled oscillator in the transmitting module. The voltage-controlled oscillator may also be referred to as a waveform generator (waveform generator), or may have another name. This is not limited herein. The voltage-controlled oscillator is configured to generate an FMCW signal. For example, the voltage-controlled oscillator in the transmitting module is configured to generate the foregoing unequal-interval frequency-stepped FMCW signal. Unless otherwise specified, the FMCW signal in this embodiment of this application is the foregoing unequal-interval frequency-stepped FMCW signal. The FMCW signal includes a plurality of chirp (chirp) signals. Start frequencies of the plurality of chirp signals vary linearly. For example, the FMCW signal includes 256 chirp signals or 512 chirp signals. In other words, 256 chirp signals or 512 chirp signals are sent in a time sequence to form a frame, namely, the foregoing FMCW signal. In this application, a quantity of chirp signals included in the FMCW signal is not limited.

In a possible implementation, a time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}}$ (6). ${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1.

In a possible implementation, the time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = {T}_{j} - {T}_{j - 1} = \frac{{f}_{c , 1} X}{\left[{f}_{c , 1}+\left(j-1\right){f}_{s}\right] \left[{f}_{c , 1}+\left(j-2\right){f}_{s}\right]}$ (7).

Meanings of parameters in formula (7) are the same as meanings of parameters in formula (6).

In a possible implementation, the time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = {T}_{j} - {T}_{j - 1} = \frac{{f}_{c , 1} X}{{{f}_{c , 1}}^{2} + \left(2j-3\right) {f}_{c , 1} {f}_{s} + \left({j}^{2}-3j+2\right) {{f}_{s}}^{2}}$ (8).

Meanings of parameters in formula (8) are the same as meanings of parameters in formula (6).

In a possible implementation, the time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = {T}_{j} - {T}_{j - 1} = \frac{{f}_{c , 1} X}{\left({{f}_{c , 1}}^{2}-3{f}_{c , 1}{f}_{s}+2{{f}_{s}}^{2}\right) + \left(2{f}_{c , 1}{f}_{s}-3{{f}_{s}}^{2}\right) j + {{f}_{s}}^{2} {j}^{2}}$ (9).

Meanings of parameters in formula (9) are the same as meanings of parameters in formula (6).

In a possible implementation, the time interval between the j^{th} chirp signal (that is, the j^{th} chirp signal that is arranged in a time sequence) and the (j-1)^{th} chirp signal of the FMCW signal in terms of time satisfies the following formula: ${T}_{c , j - 1}^{′} = \frac{X}{{f}_{c , 1} - {f}_{s} + 2 {f}_{s} \left(j-1\right) + \frac{{f}_{s}^{2}}{{f}_{c , 1}} \left({j}^{2}-3j+2\right)}$ (10).

Meanings of parameters in formula (10) are the same as meanings of parameters in formula (6).

In a possible implementation, $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time. ${T}_{c , 1}^{′}$ may be a time interval between a start moment (or a transmission moment) of the first chirp signal of the FMCW signal in terms of time and a start moment of the second chirp signal of the FMCW signal in terms of time. For example, a value of ${T}_{c , 1}^{′}$ ranges from 1 µs to 100 µs. A value of ${T}_{c , 1}^{′}$ ranges from 1 µs to 100 µs, and performance of measuring a range and a velocity of the FMCW signal is good. A value range of ${T}_{c , 1}^{′}$ may be set according to an actual requirement. This is not limited in this application. In a possible implementation, ${T}_{c , 1}^{′}$ is preconfigured, and the signal transmission apparatus generates the FMCW signal based on the preconfigured ${T}_{c , 1}^{′}$. In a possible implementation, the signal transmission apparatus may adjust ${T}_{c , 1}^{′}$, to generate an FMCW signal that meets a different requirement. In this implementation, $X = {T}_{c , 1}^{′} \left({f}_{c , 1}+{f}_{s}\right)$, so that after the frequency mixing is performed on the echo signal formed after the FMCW signal is reflected by the one or more targets, a phenomenon of spectral peak energy broadening does not exist when FFT processing is performed, thereby improving a detection probability and a measurement accuracy.

802: The signal transmission apparatus transmits the FMCW signal.

The transmitting module in the signal transmission apparatus transmits the FMCW signal.

In a possible implementation, the transmitting module includes a VCO, a PA, and a transmit antenna. The VCP generates an FMCW signal, and outputs a part of the generated FMCW signal to the PA. The PA performs power amplification on the input signal, and outputs the input signal to the transmit antenna. The transmit antenna transmits the power-amplified FMCW signal.

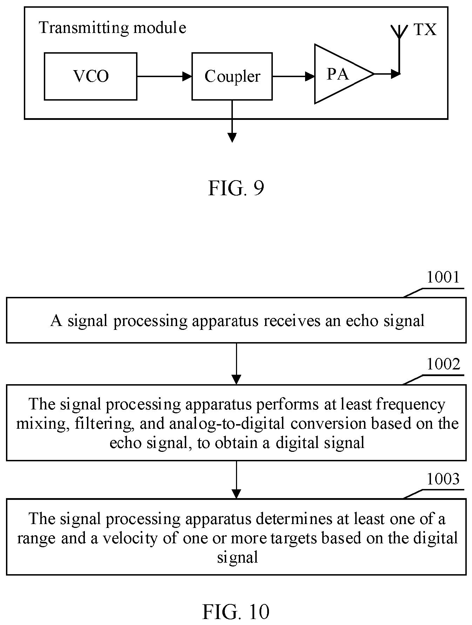

In a possible implementation, the transmitting module includes a VCO, a PA, a coupler, and a transmit antenna. Operations performed by the transmitting module include: The VCO generates an FMCW signal, outputs a part of the generated FMCW signal to the PA, and outputs a part of the generated FMCW signal through the coupler, for example, outputs the generated FMCW signal to a frequency mixer of a receiving module. The PA performs power amplification on the input signal, and outputs the power-amplified signal to the transmit antenna. The transmit antenna transmits the power-amplified FMCW signal. FIG. 9 is a diagram of a possible structure of the transmitting module according to this application. As shown in FIG. 9, the transmitting module includes a VCO, a PA, a coupler, and a TX.

The transmitting module may be hardware that can be sold independently, or may be integrated into other hardware or a terminal device. The signal transmission apparatus provided in this embodiment of this application may be the foregoing transmitting module, that is, includes only the transmitting module. The signal transmission apparatus may be hardware that can be sold separately. The signal transmission apparatus provided in this embodiment of this application may include the foregoing transmitting module and other hardware.

In this embodiment of this application, the time interval between the j^{th} chirp signal and the (j-1)^{th} chirp signal in terms of time of the FMCW signal transmitted by the signal transmission apparatus satisfies any one of the foregoing formulas (6) to (10), so that an echo signal that is formed by reflecting the FMCW signal via one or more targets and that undergoes frequency mixing satisfies the following formula (that is, an expression of the frequency-mixed echo signal satisfies the following formula): ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\}$ . In this embodiment of this application, the foregoing formula met by the echo signal that is formed after the FMCW signal is reflected by the one or more targets and that undergoes frequency mixing includes a first-order term of j and does not include a squared term (or referred to as a quadratic term) of j, so that a phase characteristic of a high-speed moving target varies linearly in a second-dimensional signal, and a phenomenon of spectral peak energy broadening does not exist when FFT processing is performed on the frequency-mixed echo signal. This can improve a detection probability and a measurement accuracy in comparison with an existing solution.

FIG. 10 is a flowchart of the signal processing method according to an embodiment of this application. As shown in FIG. 10, the method includes the following steps.

1001: A signal processing apparatus receives an echo signal.

The signal processing apparatus may include a receiving module, and that the signal processing apparatus receives the echo signal may be: The receiving module receives the echo signal. The echo signal is formed by reflecting the FMCW signal (namely, the FMCW signal transmitted by the transmitting module in FIG. 8) via one or more targets. In a possible implementation, the receiving module may include a receive antenna (receive antenna, RX), and the receive antenna in the receiving module receives an echo signal.

1002: The signal processing apparatus performs at least frequency mixing, filtering, and analog-to-digital conversion based on the echo signal, to obtain a digital signal.

In a possible implementation, the receiving module in the signal processing apparatus performs at least frequency mixing, filtering, and analog-to-digital conversion based on the echo signal, to obtain a digital signal. The analog-to-digital conversion means converting an analog signal into a digital signal, for example, converting an analog signal into a digital signal by using an analog-to-digital converter (analog-to-digital converter, ADC).

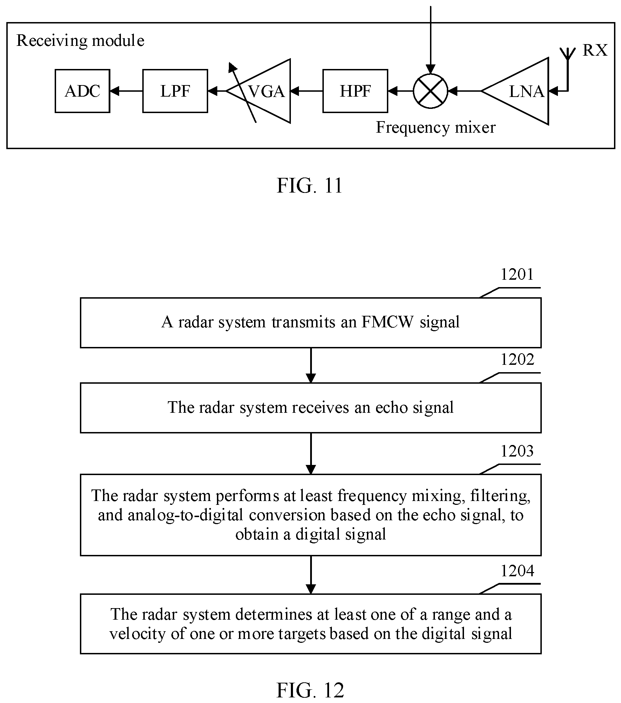

In a possible implementation, the receiving module includes a receive antenna, a low noise amplifier (low-noise amplifier, LNA), a frequency mixer, a high-pass filter (high-pass filter, HPF), a variable gain amplifier (variable gain amplifier, VGA), a low-pass filter (low-pass filter, LPF), and an ADC. Operations performed by the receiving module include: The receive antenna receives an echo signal, and outputs the received echo signal to the LNA. The LNA amplifies the echo signal received by the receive antenna, and outputs the amplified echo signal to the frequency mixer. The frequency mixer performs frequency mixing on the amplified echo signal and a corresponding FMCW signal (for example, an FMCW signal that is output by a transmitting module to the frequency mixer through a coupler) to obtain an intermediate frequency signal. The intermediate frequency signal after HPF filtering, VGA amplification, and LPF filtering is converted into a digital signal by the ADC. FIG. 11 is a diagram of a possible structure of the receiving module according to this application. As shown in FIG. 11, the receiving module includes an RX, an LNA, a frequency mixer, an HPF, a VGA, an LPF, and an ADC.

An expression of the intermediate frequency signal, namely, a frequency-mixed echo signal, may satisfy the following formula: ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\}$ (11). i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f*_{*c*,*j*} is a start frequency of the j^{th} chirp signal, T is a sampling time interval, k is a sampling index in a single chirp signal, and v is a velocity of the one or more targets. Because the expression of the intermediate frequency signal includes a first-order term of j and does not include a squared term (or referred to as a quadratic term) of j, a phenomenon of spectral peak energy broadening does not exist when FFT processing is performed on the frequency-mixed echo signal. This can improve a detection probability and a measurement accuracy in comparison with an existing solution.

1003: The signal processing apparatus determines at least one of a range and a velocity of the one or more targets based on the digital signal.

In a possible implementation, the signal processing apparatus further includes a processing module. That the signal processing apparatus determines the at least one of the range and the velocity of the one or more targets based on the digital signal may be: The processing module determines the at least one of the range and velocity of the one or more targets based on the digital signal.

In a possible implementation, a data sequence obtained after the processing module samples and quantizes the digital signal forms a two-dimensional array. In the two-dimensional array, one dimension corresponds to a sampling point sequence number k (or referred to as a fast-time dimension) of a chirp signal, and the other dimension corresponds to a chirp signal number (or referred to as a slow-time dimension). Then, a two-dimensional FFT is performed on the two-dimensional array to obtain a range-Doppler spectrum. In this way, the at least one of the range and the velocity of the one or more targets is estimated based on the range-Doppler spectrum.

Step 1002 and step 1003 are at least one possible implementation of determining the range and the velocity of the one or more targets based on the echo signal.

The signal processing apparatus may be hardware that can be sold independently, or may be integrated into other hardware or a terminal device. The signal transmission apparatus provided in this embodiment of this application may include only the receiving module and the processing module, or may include the receiving module, the processing module, and other hardware. In a possible embodiment, the signal processing apparatus further includes the transmitting module.

In a possible implementation, FIG. 8 and FIG. 10 are two independent method procedures. For example, the method procedure shown in FIG. 8 is a method procedure performed by the signal transmission apparatus (including the transmitting module) according to an embodiment of this application, and the method procedure shown in FIG. 10 is a method procedure performed by the signal processing apparatus (including the receiving module) according to an embodiment of this application. The signal transmission apparatus and the signal processing apparatus are two pieces of independent hardware.

In a possible implementation, FIG. 8 and FIG. 10 are method procedures sequentially performed by a same apparatus. For example, the radar system including the transmitting module, the receiving module, and the processing module first performs the method procedure in FIG. 8, and then performs the method procedure in FIG. 10. For another example, the vehicle-mounted millimeter-wave radar including the transmitting module, the receiving module, and the processing module first performs the method procedure in FIG. 8, and then performs the method procedure in FIG. 10.

In this embodiment of this application, the foregoing formula (11) met by the echo signal that is received by the signal processing apparatus and that undergoes frequency mixing includes a first-order term of j and does not include a squared term (or referred to as a quadratic term) of j, so that a phase characteristic of a high-speed moving target may vary linearly in a second-dimensional signal, and a phenomenon of spectral peak energy broadening does not exist when FFT processing is performed on the frequency-mixed echo signal. This can improve a detection probability and a measurement accuracy in comparison with an existing solution.

FIG. 12 is a flowchart of a detection method according to an embodiment of this application. As shown in FIG. 12, the method includes the following steps.

1201: A radar system transmits an FMCW signal.

In a possible implementation, the radar system includes the transmitting module, the receiving module, and the processing module. The transmitting module in the radar system is configured to generate and send the FMCW signal. For generation and transmission of the FMCW signal by the transmitting module in the radar system, refer to step 801 and step 802 in FIG. 8. In this application, the radar system may be replaced with a detection apparatus. An example of the radar system is a vehicle-mounted millimeter-wave radar.

1202: The radar system receives an echo signal.

The echo signal is formed by reflecting the FMCW signal (namely, the FMCW signal transmitted by the transmitting module of the radar system) via one or more targets. In a possible implementation, the receiving module in the radar system receives the echo signal.

1203: The radar system performs at least frequency mixing, filtering, and analog-to-digital conversion based on the echo signal, to obtain a digital signal.

In a possible implementation, the receiving module in the radar system performs at least frequency mixing, filtering, and analog-to-digital conversion based on the echo signal, to obtain a digital signal. Reference may be made to step 1002 in FIG. 10.

1204: The radar system determines at least one of a range and a velocity of the one or more targets based on the digital signal.

In a possible implementation, the processing module in the radar system determines at least one of a range and a velocity of the one or more targets based on the digital signal. Reference may be made to step 1003 in FIG. 10.

The radar system may be independent hardware, or may be integrated into another terminal, for example, a vehicle, a base station, or an uncrewed aerial vehicle.

In this embodiment of this application, the foregoing formula (11) met by the echo signal that is received by the radar system and that undergoes frequency mixing includes a first-order term of j and does not include a squared term (or referred to as a quadratic term) of j, so that a phase characteristic of a high-speed moving target may vary linearly in a second-dimensional signal, and a phenomenon of spectral peak energy broadening does not exist when FFT processing is performed on the frequency-mixed echo signal. This can improve a detection probability and a measurement accuracy in comparison with an existing solution.

Based on the foregoing content, the following provides a specific implementation of the foregoing radar system, to facilitate further understanding of a structure of the foregoing radar system and an implementation process in which the radar system determines associated information (a range and a velocity of a target) of a target. It should be noted that, in the foregoing modules, if there is no special description or logical conflict, other possible radar systems may be formed through combination according to an internal logical relationship of the modules. The following radar system is merely an example.

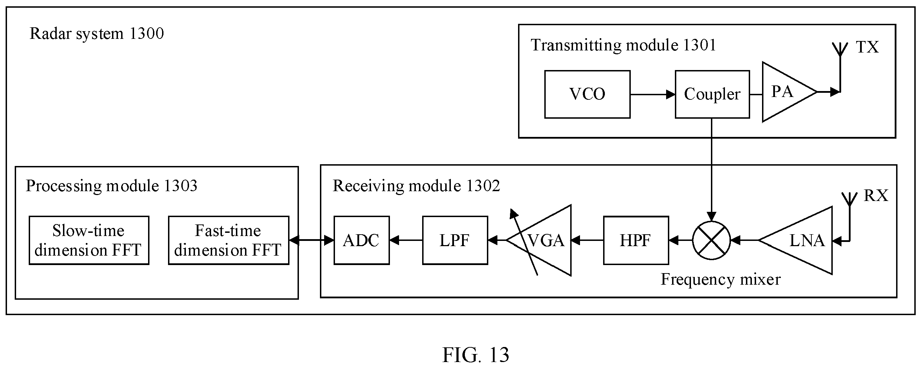

FIG. 13 is a diagram of a structure of the radar system according to this application. The radar system 1300 may include a transmitting module 1301 and a receiving module 1302, and may further include a processing module 1303. The transmitting module 1301 may include a VCO, a coupler, and a TX. The voltage-controlled oscillator is configured to generate the foregoing FMCW signal. Usually, the transmitting module 1301 transmits an FMCW signal within a frame period. For example, the FMCW signal includes 256 or 512 chirp signals. The frame period refers to a duration of transmitting a complete waveform. It should be noted that a part of the FMCW signal is used as a local oscillator signal, and is input to a frequency mixer in the receiving module 1302 through the coupler; and the other part is transmitted through a transmit antenna. For the part of the FMCW signal transmitted through the transmit antenna, refer to the foregoing related descriptions. Details are not described herein again. Further, optionally, the transmitting module 1301 may further include a PA, configured to perform power amplification on a to-be-transmitted FMCW signal before the transmit antenna transmits the FMCW signal.

The receiving module 1302 may include a receive antenna (receive antenna, RX), an LNA, a frequency mixer, an HPF, a VGA, an LPF, and an ADC. The receive antenna is configured to receive an echo signal formed by reflecting, via one or more targets, the FMCW signal transmitted by the transmit antenna. For details, refer to the foregoing related descriptions. The frequency mixer is configured to perform frequency mixing on the echo signal received by the receive antenna and a corresponding FMCW signal (for example, the FMCW signal that is output by the transmitting module to the frequency mixer through the coupler) to obtain an intermediate frequency signal. The intermediate frequency signal after HPF filtering, VGA amplification, and LPF filtering is converted into a digital signal by the ADC. A data sequence obtained after the processing module 1303 samples and quantizes the digital signal forms a two-dimensional array. In the two-dimensional array, one dimension corresponds to a sampling point sequence number k (or referred to as a fast-time dimension) of a chirp signal, and the other dimension corresponds to a chirp signal number (or referred to as a slow-time dimension). Then, a two-dimensional FFT is performed on the two-dimensional array to obtain a range-Doppler spectrum. In this way, the at least one of the range and the velocity of the one or more targets is estimated based on the range-Doppler spectrum.

Further, in some embodiments, the processing module 1303 may be a circuit having a signal (or data) processing capability. In a possible implementation, the processing module may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processing module 1303 may implement a specific function by using a logical relationship of a hardware circuit. The logical relationship of the hardware circuit is fixed or reconfigurable. For example, the processing module is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processing module loads a configuration document to implement hardware circuit configuration may be understood as a process in which the processing module loads instructions to implement functions of some or all of the foregoing units.

Based on the architecture and function principles of the radar system described above, this application may further provide a terminal device.

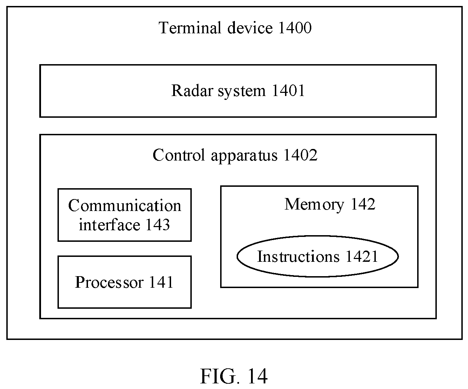

FIG. 14 is a diagram of a structure of the terminal device according to this application. The terminal device 1400 may include a radar system 1401 and a control apparatus 1402 in any one of the foregoing embodiments. The radar system 1401 may send associated information (for example, a range and a velocity of a target) of a determined target to the control apparatus 1402. The control apparatus 1402 is configured to plan a traveling trajectory based on the received associated information of the target, for example, avoiding obstacles on a traveling trajectory and implementing autonomous driving.

The radar system 1401 may be, for example, a millimeter-wave radar, and may sense a target in a surrounding environment of the terminal device by using a radio signal. In some embodiments, in addition to sensing the target, the millimeter-wave radar may be further configured to sense a velocity and/or an advancing direction of the target.

Some or all functions of the terminal device 1400 are controlled by the control apparatus 1402. The control apparatus 1402 may include at least one processor 141. The processor 141 executes instructions 1421 stored in a non-transitory computer-readable medium such as a memory 142. Further, the terminal device may further include a communication interface 143. For example, the communication interface 143 may be configured to receive, from the radar system 1401, the associated information of the target. Alternatively, the control apparatus 1402 may be a plurality of computing devices that control individual components or subsystems of the terminal device 1400 in a distributed manner.

The processor 141 may be a circuit having a signal (or data) processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by an ASIC or a PLD, for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Although FIG. 14 functionally displays the processor, the memory, and another element of the control apparatus 1402 in a same block, a person of ordinary skill in the art should understand that the processor and the memory may actually include a plurality of processors or memories that are not stored in a same physical housing. For example, the memory may be a hard disk drive or another storage medium located in a housing different from that of the control apparatus 1402.

In some embodiments, the memory 142 may include instructions 1421 (for example, program instructions), and the instructions 1421 may be read by the processor 141 to perform various functions of the terminal device 1400, including the functions described above. The memory 142 may further include additional instructions, including instructions for sending data to, receiving data from, interacting with, and/or controlling another system (for example, a propulsion system) of the terminal device. In addition to the instructions 1421, the memory 142 may further store data, such as data detected by the radar system 1401, and a location, a direction, a speed, and other information of the vehicle.

The memory may be, for example, a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium.

It should be noted that a functional framework of the terminal device provided in FIG. 14 is merely an example. In another example, the terminal device 1400 may include more, fewer, or different apparatuses, and each apparatus may include more, fewer, or different components. In addition, the shown apparatuses and components may be combined or split in any manner. This is not specifically limited in this application.

For example, the terminal device may be, for example, a traffic device. The traffic device may be, for example, a vehicle (for example, an unmanned vehicle, a smart vehicle, an electric vehicle, or a digital vehicle), a ship, a robot, a mapping device, an uncrewed aerial vehicle, a smart home device (for example, a robot vacuum cleaner or an electrical control apparatus), an intelligent manufacturing device (for example, an industrial device), an intelligent transport device (for example, an automated guided vehicle (automated guided vehicle, AGV), an unmanned transport vehicle, or a truck). The AGV is a transport vehicle that is equipped with an automatic navigation apparatus such as an electromagnetic or optical navigation apparatus, that can travel along a specified navigation route, and that has safety protection and various load transfer functions.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the radar system. Certainly, the processor and the storage medium may alternatively exist in the radar system as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, a detection apparatus, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state (solid-state drive, SSD) drive.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

Clearly, a person skilled in the art can make various modifications and variations to this application without departing from the spirit and scope of the present invention. In this way, if these changes and variations to embodiments of this application fall within the scope of the claims of this application and equivalent technologies thereof, this application is also intended to include these changes and variations.

## Claims

1. A signal transmission method, comprising:
generating a frequency modulated continuous wave FMCW signal, wherein the FMCW signal comprises a plurality of chirp (chirp) signals; and
transmitting the FMCW signal, wherein a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ wherein
${T}_{c , j - 1}^{′}$ is the time interval between the j^{th} chirp signal and the (j-1)^{th} chirp signal, *Tⱼ* is a start moment of the j^{th} chirp signal, *T*_{*j-*1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1.

2. The method according to claim 1, wherein ${T}_{c , j - 1}^{′} = {T}_{j} - {T}_{j - 1} = \frac{{f}_{c , 1} X}{\left[{f}_{c , 1}+\left(j-1\right){f}_{s}\right] \left[{f}_{c , 1}+\left(j-2\right){f}_{s}\right]}$.

3. The method according to claim 1, wherein ${T}_{c , j - 1}^{′} = {T}_{j} - {T}_{j - 1} = \frac{{f}_{c , 1} X}{{{f}_{c , 1}}^{2} + \left(2j-3\right) {f}_{c , 1} {f}_{s} + \left({j}^{2}-3j+2\right) {{f}_{s}}^{2}}$ .

4. The method according to claim 1, wherein ${T}_{c , j - 1}^{′} = {T}_{j} - {T}_{j - 1} = \frac{{f}_{c , 1} X}{\left({{f}_{c , 1}}^{2}-3{f}_{c , 1}{f}_{s}+2{{f}_{s}}^{2}\right) + \left(2{f}_{c , 1}{f}_{s}-3{{f}_{s}}^{2}\right) j + {{f}_{s}}^{2} {j}^{2}} .$

5. The method according to any one of claims 1 to 4, wherein $X = {T}_{c , 1}^{′} \left({f}_{c , 1}+{f}_{s}\right)$*,* and ${T}_{c , 1}^{′}$ is a time interval between the first chirp signal and the second chirp signal of the FMCW signal in terms of time.

6. The method according to claim 5, wherein a value of ${T}_{c , 1}^{′}$ ranges from 1 µs to 100 µs.

7. The method according to any one of claims 1 to 6, wherein there are different time intervals between two adjacent chirp signals in the plurality of chirp signals.

8. The method according to any one of claims 1 to 7, wherein start frequencies of the plurality of chirp signals vary linearly.

9. The method according to any one of claims 1 to 8, wherein the FMCW signal comprises 256 chirp signals.

10. A signal receiving method, comprising:
receiving an echo signal, wherein the echo signal is formed by reflecting a frequency modulated continuous wave FMCW signal via one or more targets, the FMCW signal comprises a plurality of chirp (chirp) signals, and a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ wherein
${T}_{c , j - 1}^{′}$ is the time interval between the j^{th} chirp signal and the (j-1)^{th} chirp signal, *Tⱼ* is a start moment of the j^{th} chirp signal, *T*_{*j-*1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1; and
determining at least one of a range and a velocity of the one or more targets based on the echo signal.

11. The method according to claim 10, wherein $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time.

12. The method according to claim 11, wherein a value of ${T}_{c , 1}^{′}$ ranges from 1 µs to 100 µs.

13. The method according to any one of claims 10 to 12, wherein determining the at least one of the range and the velocity of the one or more targets based on the echo signal comprises:
performing frequency mixing based on the FMCW signal and the echo signal, to obtain a frequency-mixed echo signal; and
determining, based on the frequency-mixed echo signal, the at least one of the range and the velocity of the one or more targets, wherein
an expression of the frequency-mixed echo signal satisfies the following formula: ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\} ,$ wherein
i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f_{c,j}* is a start frequency of the j^{th} chirp signal, T is a sampling time interval, k is a sampling index in a single chirp signal, and v is a velocity of the one or more targets.

14. A signal transmission apparatus, comprising:
a transmitting module, configured to transmit a frequency modulated continuous wave FMCW signal, wherein the FMCW signal comprises a plurality of chirp (chirp) signals, wherein
a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ wherein
${T}_{c , j - 1}^{′}$ is the time interval between the j^{th} chirp signal and the (j-1)^{th} chirp signal, *Tⱼ* is a start moment of the j^{th} chirp signal, *T*_{*j-*1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1.

15. The apparatus according to claim 14, wherein $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time.

16. The apparatus according to claim 15, wherein a value of ${T}_{c , 1}^{′}$ ranges from 1 µs to 100 µs.

17. The apparatus according to any one of claims 14 to 16, wherein there are different time intervals between two adjacent chirp signals in the plurality of chirp signals.

18. The apparatus according to any one of claims 14 to 17, wherein start frequencies of the plurality of chirp signals vary linearly.

19. The apparatus according to any one of claims 14 to 18, wherein the FMCW signal comprises 256 chirp signals.

20. A signal processing apparatus, comprising:
a receiving module, configured to receive an echo signal, wherein the echo signal is formed by reflecting a frequency modulated continuous wave FMCW signal via one or more targets, the FMCW signal comprises a plurality of chirp (chirp) signals, and a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ wherein
${T}_{c , j - 1}^{′}$ is the time interval between the j^{th} chirp signal and the (j-1)^{th} chirp signal, *Tⱼ* is a start moment of the j^{th} chirp signal, *T*_{*j*-1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1; and perform at least frequency mixing, filtering, and analog-to-digital conversion based on the echo signal, to obtain a digital signal; and
a processing module, configured to determine at least one of a range and a velocity of the one or more targets based on the digital signal.

21. The apparatus according to claim 20, wherein $X = {T}_{c , 1}^{′} \left({f}_{c , 1}+{f}_{s}\right)$, and ${T}_{c , 1}^{′}$ is a time interval between the first chirp signal and a second chirp signal of the FMCW signal in terms of time.

22. The apparatus according to claim 21, wherein a value of ${T}_{c , 1}^{′}$ ranges from 1 µs to 100 µs.

23. The apparatus according to any one of claims 20 to 22, wherein
the receiving module is further configured to perform frequency mixing based on the FMCW signal and the echo signal, to obtain a frequency-mixed echo signal; and
the processing module is specifically configured to determine, based on the frequency-mixed echo signal, the at least one of the range and the velocity of the one or more targets, wherein
an expression of the frequency-mixed echo signal satisfies the following formula: ${s}_{SF} \left(k, j\right) = exp \left\{i\left(\frac{4 {πRf}_{c , j}}{c}+2π\left(\frac{2 {Rf}_{h}}{{cT}_{c}}+\frac{2 {f}_{c , j} v}{c}\right)kT+\frac{4 πv}{c}X\left(j-1\right)\right)\right\} ,$ wherein
i is an imaginary unit, R is a range of the one or more targets, j is an index of the j^{th} chirp signal of the FMCW signal in terms of time, c is a speed of light, *fₕ* is a bandwidth of a single chirp signal, Tc is an effective transmission duration of a chirp signal, *f_{c,j}* is a start frequency of the j^{th} chirp signal, T is a sampling time interval, k is a sampling index in a single chirp signal, and v is a velocity of the one or more targets.

24. A radar system, comprising:
a transmitting module, configured to transmit a frequency modulated continuous wave FMCW signal, wherein the FMCW signal comprises a plurality of chirp (chirp) signals, wherein
a time interval between the j^{th} chirp signal and the (j-1)^{th} chirp signal of the FMCW signal in terms of time satisfies the following formula: ${T}_{c , j - 1}^{′} = {T}_{j} - {T}_{j - 1} = \frac{X \left(j-1\right)}{{f}_{c , 1} + \left(j-1\right) {f}_{s}} - \frac{X \left(j-2\right)}{{f}_{c , 1} + \left(j-2\right) {f}_{s}} ,$ wherein
${T}_{c , j - 1}^{′}$ is the time interval between the j^{th} chirp signal and the (j-1)^{th} chirp signal, *Tⱼ* is a start moment of the j^{th} chirp signal, *T*_{*j-*1} is a start moment of the (j-1)^{th} chirp signal, *f*_{*c,*1} is a start frequency of the first chirp signal of the FMCW signal in terms of time, *fₛ* is a frequency step size between start frequencies of two adjacent chirp signals of the FMCW signal, X is a fixed value, and j is an integer greater than 1;
a receiving module, configured to: receive an echo signal, wherein the echo signal is formed by reflecting the FMCW signal via one or more targets; and perform at least frequency mixing, filtering, and analog-to-digital conversion based on the echo signal, to obtain a digital signal; and
a processing module, configured to determine at least one of a range and a velocity of the one or more targets based on the digital signal.
